# EUROPÄISCHE PATENTANMELDUNG

(11) **EP 0 994 547 A2**
(43) Veröffentlichungstag der Anmeldung: **19.04.2000**
(21) Anmeldenummer: 99115971.6
(22) Anmeldetag: 13.08.1999
(51) Int. Cl.: H02H 3/33, H02H 3/05, H01H 83/22

(54) **Fehlerstromschutzsystem**

(30) Priorität: 16.10.1998 ES 9847815
(71) Anmelder: POWER CONTROLS IBERICA, S.L., 28938 Mòstoles Madrid (ES)
(72) Erfinder: Fernàndez del Rio, Jaime, 28010 Madrid (ES); Romeu, Gema Còzar, 28034 Madrid (ES); Padrino, Mari Carmen Lanzas, 28027 Madrid (ES)
(74) Vertreter: Grill, Matthias, Dipl.-Ing.

(57) **Zusammenfassung**

Gezeigt wird ein Fehlerstromschutzsystem für einen Stromkreis, mit einer Fehlerstromschutzeinrichtung zur Ermittlung eines Fehlerstromes und zur Abschaltung des Stromkreises bei Auftreten eines Fehlerstromes, einer Steuereinrichtung zur Überwachung der Fehlerstromschutzeinrichtung und zur Abgabe eines Steuersignales bei Versagen der Fehlerstromschutzeinrichtung, und einer Auslöseeinrichtung zum Abschalten des Stromkreises bei Zuführung des Steuersignales. Durch das Vorsehen einer separaten Auslöseeinrichtung, die eine Abschaltung in dem Fall bewirkt, daß die Fehlerstromschutzeinrichtung nicht mehr zur Abschaltung des Stromkreises bei Auftreten eines Fehlerstromes in der Lage ist, wird die Sicherheit des gesamten Fehlerstromschutzsystems erhöht.

## Beschreibung

Die Erfindung bezieht sich auf ein Fehlerstromschutzsystem, das beim Auftreten von Fehlerströmen einen nachgeschalteten Verbraucher abschalten kann.

Fehlerstromschutzsysteme in Form von herkömmlichen Fehlerstromschutzschaltern sind hinlänglich bekannt. Solche Fehlerstromschutzschalter umfassen einen Summenstromwandler, an dessen Sekundärseite kein Ausgangssignal ansteht, wenn kein Fehlerstrom auftritt, d.h. alle dem Verbraucher zugeführten Ströme auch über den Summenstromwandler zurückfließen, da sich dann die beiden Magnetfelder aufheben. Tritt dagegen ein Fehlerstrom auf, d.h. fließt nicht der gesamte Strom, der zum Verbraucher geschickt wurde, auch wieder zurück, sondern beispielsweise über einen anderen Teil der Anlage oder über eine die Anlage benutzende Person, tritt an der Sekundärwicklung des Summenstromwandlers ein Strom aus, über den ein im Fehlerstromschutzschalter enthaltenes Auslöserelais aktiviert wird. Dieses Auslöserelais betätigt dann seinerseits ein internes Schaltwerk oder eine externe Schalteinrichtung, das den nachgeschalteten Verbraucher abschaltet.

Die bei den herkömmlichen Fehlerstromschutzschaltern auftretenden Sekundärströme sind aber verhältnismäßig gering, so daß das Auslöserelais verhältnismäßig empfindlich sein muß. Eine solche empfindliche Auslegung des Auslöserelais bedingt aber auch eine gewisse Anfälligkeit des Auslöserelais. Fehlerstromschutzschalter weisen deshalb eine Prüftaste auf, mit der die Funktionsfähigkeit des Fehlerstromschutzschalters jederzeit überprüft werden kann.

In der deutschen Patentanmeldung 197 36 656.2 ist deshalb bereits eine Prüfeinrichtung vorgeschlagen, die selbsttätig die Funktionsfähigkeit des Auslöserelais überprüft und, falls das Auslöserelais nicht mehr funktionsfähig ist, den Fehlerstromschutzschalter abschaltet. Eine solche Abschaltung kann reversibel oder irreversibel durchgeführt werden.

Die in der deutschen Patentanmeldung 197 36 656.2 vorgeschlagene Lösung ist insbesondere in solchen Bereichen von Vorteil, in denen es um eine Erhöhung der Betriebssicherheit geht, oder in denen nicht zu erwarten ist, daß die Funktionsfähigkeit des Auslöserelais in regelmäßigen Abständen durch Betätigung der Prüftaste überprüft wird.

Die für die Betriebssicherheit geltenden Vorschriften variieren aber von Land zu Land und darüber hinaus in jedem Land von Zeit zu Zeit. Deshalb ist eine Mehrzahl von Varianten erforderlich, um das in der P 197 36 656.2 gezeigte Gerät zu realisieren, was mit einem gewissen herstellungstechnischen Aufwand verbunden ist.

Auch macht die irreversible Abschaltung eines nicht mehr voll funktionsfähigen Fehlerstromschutzschalters dann Probleme, wenn wegen der nicht mehr gewährleisteten Fehlerstromschutzfunktion die nachgeschalteten Geräte abgeschaltet werden, ohne daß eigentlich ein Fehler vorliegt. Handelt es sich bei den nachgeschalteten Geräten dann beispielsweise um Kühleinrichtungen oder elektronische Steuereinrichtungen mit Speichern, die ihre Funktion grundsätzlich 24 Stunden am Tag zur Verfügung stellen müssen, ist der durch eine irreversible Abschaltung entstandene Schaden verhältnismäßig groß.

Der Erfindung liegt deshalb die Aufgabe zugrunde, das bekannte Fehlerstromschutzsystem derart weiterzubilden, daß eine Verbesserung der Schutzfunktion weitgehend mit herkömmlichen Komponenten realisiert werden kann.

Diese Erfindung wird durch ein Fehlerstromschutzsystem der im Patentanspruch 1 angegebenen Art gelöst.

Das erfindungsgemäße Fehlerstromschutzsystem umfaßt demzufolge eine Fehlerstromschutzeinrichtung zur Ermittlung eines Fehlerstromes und zur Abschaltung eines Stromkreises bei Auftreten eines Fehlerstromes, eine Steuereinrichtung zur Überwachung der Fehlerstromschutzeinrichtung und zur Abgabe eines Steuersignales bei Versagen der Fehlerstromschutzeinrichtung und eine Auslöseeinrichtung zum Abschalten des Stromkreises bei Zuführung des Steuersignales.

Eine solche Gestaltung des Fehlerstromschutzsystems erlaubt weitgehend die Verwendung herkömmlicher Komponenten, wobei zur Anpassung an etwaige Besonderheiten in den nationalen Vorschriften stets nur eine der Komponenten verändert werden muß.

Insbesondere erlaubt die Erfindung die Verwendung eines herkömmlichen Fehlerstromschutzschalters als Fehlerstromschutzeinrichtung und eines herkömmlichen Fernauslösers als Auslöseeinrichtung. Ein Beispiel für die Funktionsweise der Steuereinrichtung ist in der deutschen Patentanmeldung 197 36 656.2 beschrieben.

Kern der Erfindung ist es somit, eine zweite Möglichkeit der Abschaltung des nachgeschalteten Verbrauchers bei Auftreten eines Fehlerstromes zu realisieren. Im Normalfall bewirkt die Fehlerstromschutzeinrichtung bei Auftreten eines Fehlerstroms die Abschaltung des nachgeschalteten Verbrauchers. Versagt jedoch die Fehlerstromschutzeinrichtung, wird dies von der Steuereinrichtung registriert und in diesem Fall eine Abschaltung über die Auslöseeinrichtung bewirkt.

Vorteilhafterweise wirken die Fehlerstromschutzeinrichtung und Auslöseeinrichtung dabei auf dieselbe Schalteinrichtung ein, so daß deren Betätigung auf Auftreten eines Fehlerstromes hin weitestgehend sichergestellt ist.

Grundsätzlich wird zwischen Fehlerstromschutzschaltern unterschieden, die eigene Schaltkontakte zur Abschaltung des Laststromkreises aufweisen, und solchen, die kein solches Schaltwerk aufweisen und den nachgeschalteten Verbraucher abschalten, indem sie einen oder mehrere neben ihnen angeordnete Leitungsschutzschalter mechanisch betätigen. Im ersten Fall betätigt die Auslöseeinrichtung mechanisch die Schaltkontakte des Fehlerstromschutzschalters, während im zweiten Fall die Auslöseeinrichtung mechanisch die Leitungsschutzschalter betätigt.

Als Auslöseeinrichtung wird, wie oben ausgeführt, ein Fernauslöser verwendet. Dieser umfaßt einige mechanische Elemente sowie eine Erregerspule mit einem beweglichen Anker. Zu den mechanischen Elementen gehört u.a. die Betätigungseinrichtung an der Frontseite des Fernauslösers und ein mechanisches Element, das von beiden Seiten des Fernauslösers beispielsweise über einen Stift zugänglich ist, dessen anderes Ende in ein entsprechend bewegliches Element des Fehlerstromschutzschalters gesteckt ist, so daß der Fernauslöser dadurch ausgelöst werden kann, daß der Fehlerstromschutzschalter den Stift in eine Auslösestellung bewegt, oder daß von einer Bedienperson das Betätigungselement an der Frontseite des Fernauslösers betätigt wird.

In beiden Fällen der mechanischen Auslösung bleibt der Anker der Erregerspule in seiner Ruhestellung. Wird im eingeschalteten Zustand des Fernauslösers dagegen die Erregerspule von einem Strom durchflossen, bewegt der Anker seinerseits eines der mechanischen Elemente des Fernauslösers, wodurch dieser dann abgeschaltet wird. Insoweit sind Fernauslöser bekannt, so daß ein herkömmlicher Fernauslöser verwendet werden kann, wenn lediglich eine reversible Abschaltung der Fehlerstromschutzeinrichtung bei Auftreten einer Funktionsuntüchtigkeit durchgeführt werden soll.

Alternativ hierzu kann jedoch in dem ansonsten bekannten Fernauslöser eine Sperreinrichtung vorgesehen werden, die auf den Anker der Erregerspule einwirkt. Bei Auslösen des Fernauslösers über die Erregerspule jedoch bewegt sich der Anker aus seiner Ruhestellung heraus und wird dann in seiner Auslösestellung von der Sperreinrichtung gehalten, so daß ein erneutes Einschalten des Fernauslösers unmöglich ist. Hierdurch wird erreicht, daß eine mechanische Auslösung reversibel und eine elektrische Auslösung irreversibel ist.

Die Erfindung wird nachfolgend anhand von Ausführungsbeispielen näher erläutert.

Es zeigen:
Figur 1 ein erstes Ausführungsbeispiel des Fehlerstromschutzsystems;
Figur 2 ein Blockschaltbild des ersten Ausführungsbeispiels nach Figur 1, und
Figur 3 eine Erläuterung der Sperreinrichtung, die in der Auslöseeinrichtung verwendet werden kann.

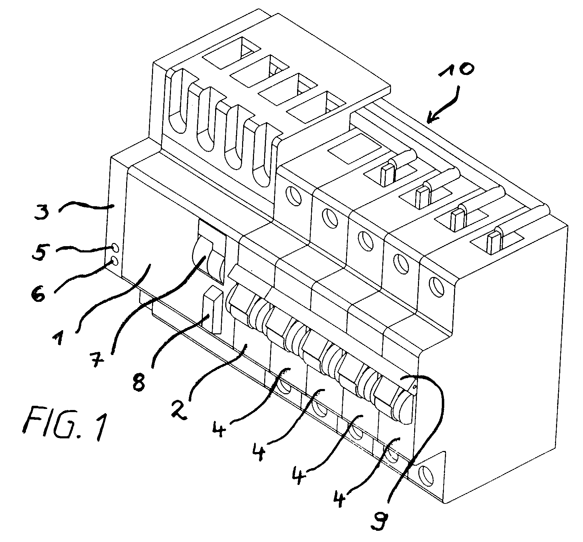

Aus der Figur 1 ist ein erstes Ausführungsbeispiel des erfindungsgemäßen Fehlerstromschutzsystems ersichtlich.

Dieses Ausführungsbeispiel umfaßt eine Fehlerstromschutzeinrichtung 1, eine Auslöseeinrichtung 2, eine Steuereinrichtung 3 und vier Schalteinrichtungen 4. Die Steuereinrichtung 3 weist ein erstes Anzeigeelement 5 und ein zweites Anzeigeelement 6 auf. Das Anzeigeelement 5 wird beispielsweise durch eine grüne Leuchtdiode und das Anzeigeelement 6 beispielsweise durch eine rote Leuchtdiode gebildet.

Die Fehlerstromschutzeinrichtung 1 weist eine Betätigungseinrichtung 7 und eine Testtaste 8 auf. Auch der Fernauslöser 2 und die Schalteinrichtungen 4 weisen Betätigungseinrichtungen 9 auf. Die Betätigungseinrichtungen 9 der Schalteinrichtungen sind miteinander gekoppelt. Alle Komponenten dieses Ausführungsbeispiels sind auf einer DIN-Schiene anbringbar.

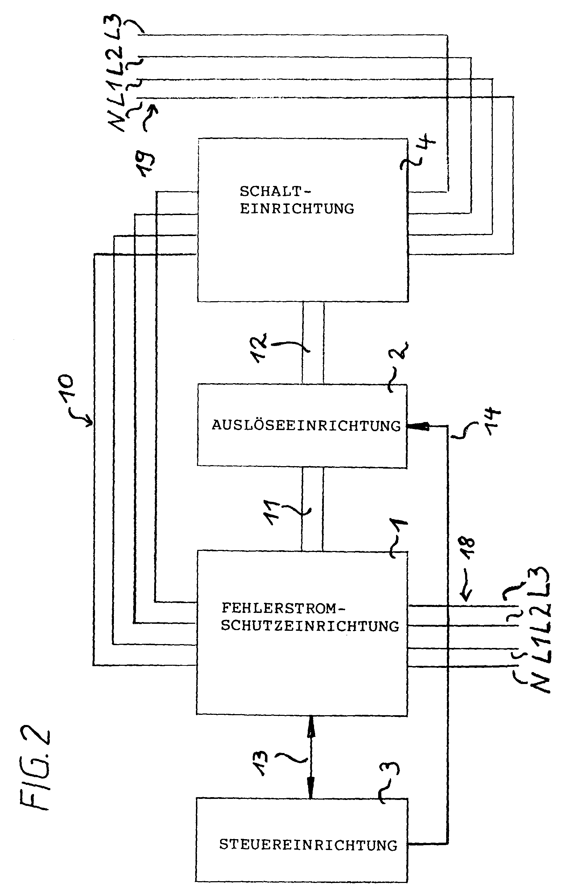

Die Figur 2 zeigt ein Blockschaltbild des ersten Ausführungsbeispiels. Dieselben Elemente in Fig. 1 und 2 weisen dieselben Bezugszeichen auf.

Darüber hinaus sind mit 18 Laststromleitungen für die Phasen L1, L2 und L3 sowie den Nulleiter N bezeichnet, die die Fehlerstromschutzeinrichtung 1 mit dem Verbraucher verbinden. Die Fehlerstromschutzeinrichtung 1 ist mit Laststromleitungen 10 mit den Schalteinrichtungen 4 verbunden. Weitere Laststromleitungen 19 für die Phasen L1, L2 und L3 sowie den Nulleiter N führen zum Netz.

Die Fehlerstromschutzeinrichtung 1 ist mittels einer mechanischen Verbindungseinrichtung 11 mit der Auslöseeinrichtung 2 verbunden. Bei der mechanischen Verbindungseinrichtung kann es sich beispielsweise um einen Stift handeln, der in ein mechanisches Element der Fehlerstromschutzeinrichtung 1 eingesteckt ist, das sich bei Ein- bzw. Ausschalten der Fehlerstromschutzeinrichtung bewegt. Hierdurch bewegt sich auch die mechanische Verbindungseinrichtung und ein entsprechendes mechanisches Element in der Auslöseeinrichtung 2. Um die Bewegung der mechanischen Verbindungseinrichtung zu ermöglichen, sind die Gehäuse von Auslöseeinrichtung 2 und Fehlerstromschutzeinrichtung 1 entsprechend geöffnet.

Auch zwischen der Auslöseeinrichtung 2 und der Schalteinrichtung 4 ist eine mechanische Verbindungseinrichtung 12 in Form eines Stiftes eingesetzt, die in derselben Art und Weise wirkt wie die mechanische Verbindungseinrichtung 11 zwischen der Fehlerstromschutzeinrichtung 1 und der Auslöseeinrichtung 2. Die mechanischen Verbindungseinrichtungen 11 und 12 können dabei in demselben mechanischen Element des Auslösers eingesetzt sein.

Die Fehlerstromschutzeinrichtung 1 ist darüber hinaus über eine Mehrzahl von Signalleitungen 13 mit der Steuereinrichtung 3 verbunden. Die Steuereinrichtung 3 ist ihrerseits noch über eine Signalleitung 14 mit der Auslöseeinrichtung 2 verbunden.

Nachfolgend wird nun die Wirkungsweise des in Figur 1 und 2 gezeigten Ausführungsbeispiels erläutert.

Die Schalteinrichtung 4 ist über die Laststromleitungen 19 mit dem Netz verbunden. Der Laststrom fließt weiter über die Laststromleitung 10 zur Fehlerstromschutzeinrichtung 1 und von dort über die Laststromleitungen 18 zum Verbraucher. Tritt nun eine Störung hinter der Fehlerstromschutzeinrichtung auf, die einen Fehlerstrom verursacht, löst die Fehlerstromschutzeinrichtung 1 aus. Hierdurch wird die mechanische Verbindungseinrichtung 11 in eine Auslöseposition bewegt, wodurch gleichzeitig über die Auslöseeinrichtung 2 auch die mechanische Verbindungseinrichtung 12 in die Auslöseposition bewegt wird. Hierdurch schaltet die Schalteinrichtung 4 den Strom zu dem Verbraucher ab.

Die Steuereinrichtung 3 überwacht fortwährend die Funktionsweise der Fehlerstromschutzeinrichtung 1. Spricht die Fehlerstromschutzeinrichtung 1 nicht innerhalb einer vorgegebenen Zeit auf einen vorbestimmten Fehlerstrom an, erhöht die Steuereinrichtung 3 ihrerseits den Fehlerstrom, bis die Fehlerstromschutzeinrichtung 1 anspricht. Spricht die Fehlerstromschutzeinrichtung 1 auch dann nicht an, gibt die Steuereinrichtung 3 über die Signalleitung 14 ein Steuersignal an die Auslöseeinrichtung 2 ab, wodurch dann die Auslöseeinrichtung 2 über die mechanische Verbindungseinrichtung 12 die Schalteinrichtung 4 abschaltet.

Die Steuereinrichtung 3 hat zur Anzeige des jeweiligen Betriebszustandes zwei Anzeigeelemente 5, 6 an ihrer Frontseite. Im Normalfall führt die Steuereinrichtung 3 selbständig in vorbestimmten Zeitabschnitten eine Funktionsüberprüfung der Fehlerstromschutzeinrichtung 1 durch. Ergibt diese Funktionsüberprüfung, daß die Fehlerstromschutzeinrichtung einwandfrei arbeitet, leuchtet das erste, grüne Anzeigeelement 5.

Stellt die Steuereinrichtung 3 dagegen fest, daß die Fehlerstromschutzeinrichtung 1 nicht einwandfrei arbeitet, deren Funktionsweise aber noch durch Einspeisung eines Zusatzstromes zu dem Auslöserelais gewährleistet werden kann, erlischt das erste Anzeigeelement und blinkt das zweite, rote Anzeigeelement 6. Erst wenn die Fehlerstromschutzeinrichtung völlig funktionsuntüchtig ist, leuchtet das Anzeigeelement 6 kontinuierlich. In diesem Fall führt die Steuereinrichtung 3 der Auslöseeinrichtung 2 ein Steuersignal zur Auslösung der Auslöseeinrichtung 2 zu.

Die Funktionsweise der Steuereinrichtung 3 entspricht soweit der entsprechenden Steuereinrichtung gemäß der deutschen Patentanmeldung 197 36 656.2.

Durch die beschriebene Vorgehensweise ist sichergestellt, daß bei Auftreten eines Fehlerstromes stets der Verbraucher abgeschaltet werden kann. Entweder ist die Fehlerstromschutzeinrichtung selbst hierzu in der Lage, diese Abschaltung sicherzustellen, oder aber die Steuereinrichtung 3 übernimmt diese Aufgabe über die Auslöseeinrichtung 2.

Wie aus der Figur 1 des weiteren ersichtlich, ist das Fehlerstromschutzsystem gemäß dem ersten Ausführungsbeispiel mit Ausnahme der Steuereinrichtung 3 ausschließlich mit Standardkomponenten realisiert. Bei der Fehlerstromschutzeinrichtung 1 handelt es sich um einen Fehlerstromschutzschalter ohne eigenes Schaltwerk, bei der Auslöseeinrichtung 2 handelt es sich um einen Fernauslöser, und bei den Schalteinrichtungen 4 handelt es sich um vier parallel geschaltete Leitungsschutzschalter, deren Betätigungselemente 9 mit einer Schiene verbunden sind, so daß diese vier Leitungsschutzschalter stets gleichzeitig auslösen.

In einigen Ländern kann es nun erforderlich sein, eine irreversible Abschaltung für den Fall vorzusehen, daß die Fehlerstromschutzeinrichtung vollständig ihre Funktionstüchtigkeit verliert.

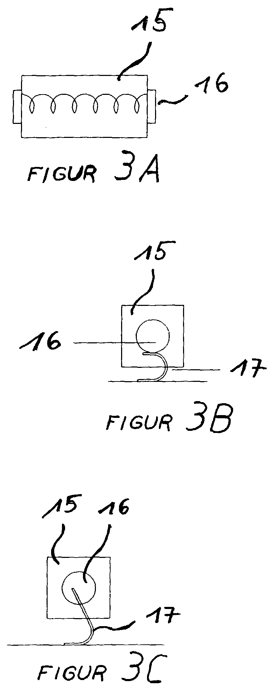

In diesem Fall wird die Auslöseeinrichtung 2 um eine später im Zusammenhang mit der Figur 3 näher erläuterte Sperreinrichtung ergänzt. Diese Sperreinrichtung bewirkt, daß bei einer Auslösung der Auslöseeinrichtung 2 durch ein Steuersignal über die Signalleitung 14 eine irreversible Abschaltung vorgenommen wird, die auch durch Betätigung des Betätigungselementes der Auslöseeinrichtung 2 nicht mehr rückgängig gemacht werden kann.

Dagegen bleibt eine Abschaltung der Auslöseeinrichtung 2 auf mechanischem Wege reversibel.

Abweichend von dem in den Figuren 1 und 2 erläuterten Ausführungsbeispiel kann die Fehlerstromschutzeinrichtung auch für eine einzige Phase vorgesehen sein. In diesem Fall werden über die Fehlerstromschutzeinrichtung lediglich ein Nulleiter und die Phase geführt, und ist nur ein einziger Leitungsschutzschalter 4 erforderlich. Auch kann die Auslöseeinrichtung 2 nach Fig. 1 rechts neben der Schalteinrichtung 4 angeordnet werden.

Gemäß einem zweiten, nicht in den Figuren gezeigten Ausführungsbeispiel verwendet das erfindungsgemäße Schutzsystem eine Fehlerstromschutzeinrichtung 1 mit einer eigenen Schalteinrichtung. In diesem Fall sind die Leitungsschutzschalter 4 selbstverständlich überflüssig. Ansonsten ist die Auslöseeinrichtung 2 mit der Fehlerstromschutzeinrichtung und der Steuereinrichtung wie im ersten Ausführungsbeispiel zu verbinden. Die Auslöseeinrichtung schaltet bei diesem Ausführungsbeispiel die Schalteinrichtung der Fehlerstromschutzeinrichtung 1 ab.

Darüber hinaus kann die Fehlerstromschutzeinrichtung gemäß dem zweiten Ausführungsbeispiel auch noch die Aufgaben eines herkömmlichen Leitungsschutzschalters übernehmen.

Schließlich ist auch das zweite Ausführungsbeispiel sowohl für ein Ein-Leiter-Netz als auch für ein Drei-Leiter-Netz realisierbar.

Wie oben ausgeführt, kann es sich bei der Auslöseeinrichtung 2 um einen herkömmlichen Fernauslöser handeln. Wird jedoch eine irreversible Abschaltung im Falle der Zuführung eines Steuersignales zu der Auslöseeinrichtung 2 gewünscht, wird die Auslöseeinrichtung 2 um eine Sperreinrichtung 17 ergänzt, die in Figur 3 erläutert wird.

Die Figur 3A zeigt eine Erregerspule 15 und einen Anker 16, der durch eine nicht gezeigte Feder in seiner Ruhestellung gehalten wird. Fließt durch die Erregerspule 15 kein Strom, so bleibt der Anker 16 in seiner Ruhestellung. Wird dagegen der Erregerwicklung 15 ein Steuersignal zugeführt, tritt der Anker 16 aus der Ruhestellung aus und verschiebt hierdurch eines der mechanischen Elemente der Auslöseeinrichtung 2 in eine Auslöseposition.

Andererseits wird bei einer Verschiebung der mechanischen Elemente der Auslöseeinrichtung 2 der Anker 16 nicht bewegt.

In Figur 3B und 3C ist nun die Sperreinrichtung 17 erläutert, die beispielsweise aus einem Federelement bestehen kann, das seitlich gegen den Anker 16 drückt, und diesen in seiner Ruhestellung nicht beeinflußt.

Tritt jedoch der Anker 16 aus seiner Ruhestellung aus, kann sich das Federelement 17 entspannen und versperrt hierdurch, wie in Figur 3C gezeigt, dem Anker den Rückzug in seine Ruheposition. Die Mechanik der Auslöseeinrichtung 2 ist dabei dergestalt, daß, solange sich der Anker 16 in seiner Auslöseposition befindet, ein Wiedereinschalten der Auslöseeinrichtung 2 nicht möglich ist.

Hierdurch bewirkt die Zuführung eines Steuersignales zu der Erregerspule 15 eine irreversible Abschaltung der Auslöseeinrichtung 2.

Gezeigt wird ein Fehlerstromschutzsystem für einen Stromkreis, mit einer Fehlerstromschutzeinrichtung zur Ermittlung eines Fehlerstromes und zur Abschaltung des Stromkreises bei Auftreten eines Fehlerstromes, einer Steuereinrichtung zur Überwachung der Fehlerstromschutzeinrichtung und zur Abgabe eines Steuersignales bei Versagen der Fehlerstromschutzeinrichtung, und einer Auslöseeinrichtung zum Abschalten des Stromkreises bei Zuführung des Steuersignales. Durch das Vorsehen einer separaten Auslöseeinrichtung, die eine Abschaltung in dem Fall bewirkt, daß die Fehlerstromschutzeinrichtung nicht mehr zur Abschaltung des Stromkreises bei Auftreten eines Fehlerstromes in der Lage ist, wird die Sicherheit des gesamten Fehlerstromschutzsystems erhöht.

## Patentansprüche

1. Fehlerstromschutzsystem für einen Stromkreis mit
einer Fehlerstromschutzeinrichtung (1) zur Ermittlung eines Fehlerstromes und zur Abschaltung des Stromkreises bei Auftreten eines Fehlerstromes,
einer Steuereinrichtung (3) zur Überwachung der Fehlerstromschutzeinrichtung und zur Abgabe eines Steuersignales bei Versagen der Fehlerstromschutzeinrichtung, und
einer Auslöseeinrichtung (2) zum Abschalten des Stromkreises bei Zuführung des Steuersignales.

2. Fehlerstromschutzsystem nach Anspruch 1, dadurch gekennzeichnet, daß die Auslöseeinrichtung ein von der Fehlerstromschutzeinrichtung getrennt angeordneter Fernauslöser ist und eines oder mehrere mechanische Elemente sowie eine Erregerspule (15) mit einem beweglichen Anker (16) umfaßt, wobei die Auslöseeinrichtung mechanisch dadurch ausgelöst wird, daß eines der mechanischen Elemente in eine Auslösestellung verschoben wird und elektrisch dadurch ausgelöst wird, daß der Erregerspule das Steuersignal zugeführt wird und der Anker daraufhin eines der mechanischen Elemente in die Auslösestellung verschiebt.

3. Fehlerstromschutzsystem nach Anspruch 2, dadurch gekennzeichnet, daß der Anker bei einer mechanischen Auslösung der Auslöseeinrichtung nicht bewegt wird, und daß eine Sperreinrichtung (17) vorgesehen ist, die eine Rückbewegung des Ankers in seine Ruhestellung verhindert, so daß eine mechanische Auslösung reversibel und eine elektrische Auslösung irreversibel ist.

4. Fehlerstromschutzsystem nach Anspruch 3, dadurch gekennzeichnet, daß die Sperreinrichtung ein Federelement umfaßt, das im eingeschalteten Zustand des Fernauslösers seitlich gegen den Anker drückt und bei Verschiebung des Ankers in die Auslösestellung in den Bewegungspfad des Ankers eintritt und somit verhindert, daß der Anker in seine Ruhestellung zurückgehen kann.

5. Fehlerstromschutzsystem nach einem der vorhergehenden Ansprüche, dadurch gekennzeichnet, daß die Fehlerstromschutzeinrichtung eine eigene Schalteinrichtung zur Abschaltung des Stromkreises umfaßt, und daß die Auslöseeinrichtung mechanisch mit der Fehlerstromschutzeinrichtung verbunden ist und bei Zuführung eines Steuersignales mechanisch die Abschaltung der Fehlerstromschutzeinrichtung bewirkt.

6. Fehlerstromschutzsystem nach einem der Ansprüche 1 bis 4, dadurch gekennzeichnet, daß eine von der Fehlerstromschutzeinrichtung getrennte Schalteinrichtung (4) vorgesehen ist und daß die Auslöseeinrichtung mechanisch mit der Schalteinrichtung verbunden ist und bei Zuführung eines Steuersignales mechanisch die Abschaltung der Schalteinrichtung bewirkt.

7. Fehlerstromschutzsystem nach Anspruch 6, dadurch gekennzeichnet, daß als Schalteinrichtung eine oder mehrere mechanisch gekoppelte Leitungsschutzschalter verwendet werden, die von der Fehlerstromschutzeinrichtung und der Auslöseeinrichtung räumlich getrennt angeordnet sind.

8. Fehlerstromschutzsystem nach Anspruch 7, dadurch gekennzeichnet, daß die Auslöseeinrichtung zwischen der Fehlerstromschutzeinrichtung und der Schalteinrichtung angeordnet ist und auch mit der Fehlerstromschutzeinrichtung mechanisch gekoppelt ist.

9. Fehlerstromschutzsystem nach Anspruch 8, dadurch gekennzeichnet, daß bei einem ordnungsgemäßen Auslösen der Fehlerstromschutzeinrichtung diese die Auslöseeinrichtung mechanisch auslöst und dadurch die Schalteinrichtung von der Auslöseeinrichtung mechanisch ausgelöst wird.

10. Fehlerstromschutzeinrichtung nach einem der Ansprüche 1, 2 oder 5 bis 9, dadurch gekennzeichnet, daß es sich bei der Fehlerstromschutzeinrichtung, der Auslöseeinrichtung und der Schalteinrichtung um handelsübliche Komponenten handelt.

11. Fehlerstromschutzsystem nach einem der vorhergehenden Ansprüche, dadurch gekennzeichnet, daß die Steuereinrichtung in einem separaten Gehäuse untergebracht ist.
